# EUROPÄISCHE PATENTANMELDUNG

(11) **EP 3 115 584 A1**
(43) Veröffentlichungstag der Anmeldung: **11.01.2017**
(21) Anmeldenummer: 16177925.1
(22) Anmeldetag: 05.07.2016
(51) Int. Cl.: F02D 41/06, F02D 41/38, F02D 19/06

(54) **DIREKTEINSPRITZENDE SELBSTZÜNDENDE BRENNKRAFTMASCHINE**

(30) Priorität: 10.07.2015 AT 4562015
(71) Anmelder: Waldland Naturstoffe GmbH, 3533 Friedersbach (AT)
(72) Erfinder: SPANDL, Stefan, 2011 Sierndorf (AT)
(74) Vertreter: Oberhardt, Knut

(57) **Zusammenfassung**

Die Erfindung geht aus von einer direkteinspritzenden selbstzündenden Brennkraftmaschine, die mit einem Kraftstoff mit niedrigem Zündpunkt und mit einem Kraftstoff mit höherem Zündpunkt betreibbar ist, mit wenigstens einem Injektor (15) zum Einspritzen von Kraftstoff, einem Hochdruckspeicher (9) für den Kraftstoff, einer Hochdruckpumpe (5) und einer Zumesseinheit (6) und mit einer elektronischen Steuerung, in der unterschiedliche Steuerungsparameter für den Betrieb mit dem Kraftstoff mit niedrigem Zündpunkt und dem Betrieb mit dem Kraftstoff mit höherem Zündpunkt hinterlegt sind. Erfindungsgemäß ist in der elektronischen Steuerung der Startdruck (25) hinterlegt, der in dem Hochdruckspeicher (9) erreicht werden muss, damit die Startfreigabe erfolgt, wobei der Startdruck (25) für den Kraftstoff mit dem höheren Zündpunkt gegenüber dem Kraftstoff mit dem niedrigen Zündpunkt mehr als 30 % erhöht ist.

## Beschreibung

Die Erfindung betrifft eine direkteinspritzende selbstzündende Brennkraftmaschine nach dem Oberbegriff von Anspruch 1.

Aufgrund der Verknappung von Erdöl und aus Gründen des Umweltschutzes sind Motoren bekannt geworden, die mit Pflanzenöl oder anderen aus Pflanzenöl gewonnenen Kraftstoffen betrieben werden können. Die alten Vor- und Wirbelkammermotoren konnten so abgeändert werden, dass sie im so genannten Ein-Tank-System für den Betrieb mit Pflanzenöl geeignet waren. Diese Motoren konnten nach der Anpassung auf den Pflanzenölbetrieb jedoch weiterhin auch mit Dieselkraftstoff betrieben werden.

Bei den direkteinspritzenden Dieselmotoren, die insbesondere mit Common-Rail-Technik arbeiten, sind die Parameter für die Motorsteuerung so auf einen einzigen Kraftstoff optimiert, dass ein Betrieb mit einem alternativen Kraftstoff praktisch nicht mehr möglich ist. Dies ist zurückzuführen auf die doch sehr unterschiedlichen Eigenschaften von Pflanzenöl und Dieselkraftstoff. Während Dieselkraftstoff beispielsweise über einen beachtlichen Temperaturbereich keine Viskositätsänderung zeigt, ist Pflanzenöl bei tieferen Temperaturen doch sehr zähflüssig. Weiterhin handelt es sich bei Pflanzenöl um einen Kraftstoff, dessen Zündpunkt erheblich höher liegt als der Zündpunkt von Dieselkraftstoff.

Das bedeutet, dass bei Pflanzenöl diejenige Temperatur, auf die man das Pflanzenöl erhitzen muss, damit es sich in Gegenwart von Luftsauerstoff ohne Zündquelle, ausschließlich aufgrund seiner Erhitzung, selbst entzündet, wesentlich höher liegt als bei Dieselkraftstoff. Der Zündpunkt von Dieselkraftstoff liegt bei ca. 220°C, während der Zündpunkt von Pflanzenöl - abhängig von der Sorte - bei etwa 300°C liegt.

Diese Unterschiede führen dazu, dass bei modernen Motoren, die auf Leistung und Abgasverhalten optimiert sind, bei Verwendung dieser unterschiedlichen Treibstoffe auch mit unterschiedlichen Motorsteuerungsparametern operiert werden muss. Dies würde bedeuten, dass ein Motor, der einmal an den Betrieb mit Pflanzenöl angepasst ist, nicht mehr mit Dieselkraftstoff zu betreiben ist. Da europaweit jedoch keine flächendeckende Versorgung mit Pflanzenöl gewährleistet ist, würde dies einen enormen Komfortverlust bedeuten. Die weitere Marktdurchsetzung mit Pflanzenölmotoren wäre daher stark in Frage gestellt.

Gerade im landwirtschaftlichen Bereich ist es aber auch heute noch nicht abschätzbar, wie sich der Preis für Pflanzenöl zukünftig entwickeln wird. Da landwirtschaftliche Maschinen aber in den meisten Fällen auf eine sehr lange Lebensdauer ausgelegt sind, wäre in diesem Bereich eine ausschließlich mit Pflanzenöl betreibbare Maschine nicht in größeren Stückzahlen verkaufbar.

Es hat sich herausgestellt, dass es bei modernen selbstzündenden Brennkraftmaschinen, beispielsweise bei Brennkraftmaschinen mit Common-Rail-Technik, zu Startschwierigkeiten kommen kann, wenn die Temperatur im Winter stark abfällt. Dies gilt ganz besonders, wenn alternative Kraftstoffe wie Pflanzenöl oder entsprechende Gemische mit hohem Zündpunkt und hoher Viskosität bei niedrigen Temperaturen verwendet werden. Bei dieser Problematik kann aber auch die Verschiebung des Einspritzzeitpunkts nur bedingt helfen.

Es wurde bereits versucht, den Kraftstoff vor der Einspritzung über Wärmetauscher aus dem Kühlkreislauf des Motors zu erwärmen. Diese Maßnahme hat sich zwar nach dem Start als wirkungsvoll erwiesen, konnte die Startprobleme aber nicht mindern, da für die Startphase noch kein angewärmter Kraftstoff zur Verfügung steht.

Es wurde auch bereits versucht, den Kraftstoff elektrisch vorzuheizen, indem die Kraftstoffleitung vor der Hochdruckpumpe mit einer elektrischen Heizmanschette umwickelt wurde. Auf diese Weise konnten Erfolge bei der Startfähigkeit erzielt werden, es hat sich jedoch herausgestellt, dass sehr lange Vorheizzeiten benötigt werden und die Batterie damit sehr stark belastet wird.

Auch andere Heiz-Lösungen werden oftmals als zu umständlich und zu teuer angesehen und aus diesen Gründen abgelehnt.

Der Erfindung liegt die Aufgabe zugrunde, eine direkteinspritzende selbstzündende Brennkraftmaschine so weiterzubilden, dass sie sowohl mit einem Kraftstoff mit niedrigem Zündpunkt - insbesondere Pflanzenöl oder einem aus Pflanzenöl gewonnenen Kraftstoff-als auch mit Dieselkraftstoff betrieben werden kann und mit beiden Kraftstoffen ohne aufwändige Maßnahmen auch bei tiefen Temperaturen gestartet werden kann.

Gelöst wird die Aufgabe gemäß der Erfindung durch eine direkteinspritzende selbstzündende Brennkraftmaschine mit den Merkmalen von Anspruch 1. Erfindungsgemäß ist in der elektronischen Steuerung der Startdruck hinterlegt ist, der in dem Hochdruckspeicher erreicht werden muss, damit die Startfreigabe erfolgt, wobei der Startdruck für den Kraftstoff mit dem höheren Zündpunkt gegenüber dem Kraftstoff mit dem niedrigen Zündpunkt mehr als 30 % insbesondere mehr als 50 % erhöht ist.

Es wurde herausgefunden, dass für die Startproblematik bei dem Betrieb mit Kraftstoffen mit höherem Zündpunkt oftmals ein Filter- und Dämpfelement mit verantwortlich ist, das zwischen dem Hochdruckspeicher und dem Injektor in die Kraftstoffleitung eingesetzt ist. In vielen Fällen befindet sich dieses Filter- und Dämpfelement auch in dem so genannten Druckrohrstutzen direkt am Injektor. Das Filter- und Dämpfelement hat normalerweise hauptsächlich die Aufgabe, zu verhindern, dass von dem Kraftstoff mitgerissene Partikel, wie beispielsweise Späne, die bei der Montage entstehen können, der Brennkraftmaschine zugeführt werden und so zu Beschädigungen führen können.

Das Filter- und Dämpfelement hat aber ebenso die Wirkung, Schwingungen in der Kraftstoffleitung zwischen dem Hochdruckspeicher und dem Injektor zu verhindern. Solche Schwingungen können durch das Öffnen und Schließen des Injektors entstehen und dazu führen, dass während der Einspritzung an den Einspritzöffnungen des Injektors ein schwankender Druck ansteht, was zu Ungenauigkeiten in der Einspritzung führen kann. Durch das Filter- und Dämpfelement wird das Entstehen solcher Schwingungen verhindert.

Das Filter- und Dämpfelement hat - um seine Aufgaben erfüllen zu können - relativ kleine Durchlässe für den Kraftstoff. Befindet sich in diesem Leitungsabschnitt nun der Kraftstoff mit höherem Zündpunkt, kann es bei niedrigen Temperaturen zu einem eingeschränkten Volumenfluss durch das Filter- und Dämpfelement kommen. Durch die erfindungsgemäße Anhebung des Startdrucks liegt auch an dem Filter- und Dämpfelement beim Start der Brennkraftmaschine ein höherer Kraftstoffdruck an. Der eingeschränkte Volumenfluss kann hierdurch kompensiert werden, ohne dass dabei Nachteile bei der Einspritzung durch den Injektor entstehen.

Im Injektor steht auf diese Weise in etwa der gleiche Kraftstoffdruck zur Einspritzung an, wie bei Verwendung des Kraftstoffs mit niedrigem Zündpunkt. Es lassen sich folglich durch den unterschiedlichen Startdruck für die beiden Kraftstoffarten ähnliche Bedingungen im Injektor erreichen.

Weitere Einzelheiten und Vorteile der Erfindung ergeben sich aus den Unteransprüchen.

Bei den ersten Common-Rail-Systemen ist die Förderleistung der Hochdruckpumpe so ausgelegt, dass die Versorgung bei Volllast und hoher Drehzahl ausreicht und im Leerlauf bzw. bei Teillast ein Fördermengenüberschuss besteht. Dieser zu viel geförderte Kraftstoff wird über ein Druckregelventil an dem Hochdruckspeicher zum Kraftstofftank zurückgeführt. Nachteilig dabei war ein zu hoher Leistungsbedarf der Hochdruckpumpe und eine zu starke Kraftstofferwärmung im Rücklauf.

Bei den neueren Common-Rail-Systemen wird der Druck in dem Hochdruckspeicher (Raildruck) niederdruckseitig über ein Mengenregelventil (Zumesseinheit) geregelt. Dabei wird der in die Pumpenelemente strömende Kraftstoff durch das stufenlos regelbares Magnetventil der Zumesseinheit dosiert. Dieses Magnetventil passt die in den Hochdruckspeicher geförderte Kraftstoffmenge dem Systembedarf an. Bei der Ansteuerung des Magnetventils wird ein Kolben durch Magnetkraft betätigt, der entsprechend seiner Stellung, einen unterschiedlichen Zulaufquerschnitt freigibt. Mit dieser Mengenregelung wird der Leistungsbedarf der Hochdruckpumpe gesenkt und sie fördert nur so viel Kraftstoff, dass der momentan erforderliche Druck in dem Hochdruckspeicher (Raildruck) erzeugt werden kann. Die Hochdruckpumpe fördert auf diese Weise nur die Kraftstoffmenge, die der Motor tatsächlich benötigt. Dadurch sinkt der Energiebedarf der Hochdruckpumpe und damit der Kraftstoffverbrauch. Besonders vorteilhaft sind deshalb in der elektronischen Steuerung Parameter zur Steuerung der Zumesseinheit hinterlegt, wobei die Öffnung der Zumesseinheit für den Kraftstoff mit dem höheren Zündpunkt für den Startvorgang gegenüber dem Kraftstoff mit dem niedrigen Zündpunkt mehr als 20 % vergrößert ist. Durch diese Maßnahme lässt sich der erhöhte Startdruck in dem Hochdruckspeicher für den Kraftstoff mit höherem Zündpunkt schneller erreichen.

Besonder vorteilhaft bewirken die in der elektronischen Steuerung hinterlegten Parameter für den Betrieb der Brennkraftmaschine mit dem Kraftstoff mit dem höheren Zündpunkt beim Starten der Brennkraftmaschine eine vollständige Öffnung der Zumesseinheit. Hierdurch lässt sich das Erreichen des Startdrucks am meisten beschleunigen.

Bei Common-Rail-Systemen, bei denen der Druck nur auf der Saugseite mit der Zumesseinheit eingestellt werden kann, hat sich gezeigt, dass der Druckaufbau bzw. der Druckabbau im Hochdruckspeicher bei schnellen Lastwechseln oftmals zu lange dauert weil die Druckanpassung an die veränderten Lastbedingungen zu träge reagiert. Deshalb werden bei den neuesten Common-Rail-Systemen, die auch oftmals mit Piezo-Inline-Injektoren ausgerüstet sind, zur Druckregelung zwei Drucksteller eingesetzt. Diese Common-Rail-Systeme enthalten neben der Zumesseinheit an der Hochdruckpumpe zusätzlich ein Druckregelventil an dem Hochdruckspeicher. Hierdurch werden die Vorteile der niederdruckseitigen Regelung mit der schnellen hochdruckseitigen Regelung kombiniert. Besonders vorteilhaft ist deshalb an dem Hochdruckspeicher ein über die elektronische Steuerung ansteuerbares Druckregelventil vorgesehen, wobei die in der elektronischen Steuerung hinterlegten Parameter für den Betrieb der Brennkraftmaschine mit dem Kraftstoff mit dem höheren Zündpunkt während der Startphase der Brennkraftmaschine eine Regelung des Höchstdruckes in dem Druckspeicher ausschließlich über das Druckregelventil bewirken. Hierdurch wird zwar während des Startvorgangs mit dem Kraftstoff mit höherem Zündpunkt der Energiebedarf minimal erhöht, aber es ergibt sich auch in dem Hochdruckspeicher eine höhere Kraftstofftemperatur, so dass die Viskosität des Kraftstoffs mit höherem Zündpunkt herabgesetzt wird.

Üblicherweise besitzen Kraftstoffe mit höherem Zündpunkt bei tiefen Temperaturen eine hohe Viskosität. Dagegen ist beispielsweise die Viskosität bei den meisten Sorten von Pflanzenölkraftstoffen und bei Dieselkraftstoff bei höheren Temperaturen nahezu identisch. Eine Ansteuerung von Komponenten des Kraftstoffzuführsystems mit unterschiedlichen Parametern bei der Verwendung von Kraftstoff mit hohem Zündpunkt ist aus diesem Grund normalerweise nur bei tieferen Temperaturen notwendig. Es ist deshalb vorteilhaft eine Grenztemperatur festgelegt, oberhalb der die Steuerungsparameter für den Startdruck und/oder die Regelung der Zumesseinheit während der Startphase und/oder die Regelung des Druckregelventils während der Startphase für beide Kraftstoffe identisch sind.

Die meisten Pflanzenölkraftstoffe verhalten sich bezüglich ihrer Viskosität oberhalb einer bestimmten Temperatur ähnlich wie Dieselkraftstoff. Dies gilt sogar für Kraftstoffe auf Basis hochviskoser Pflanzenöle. Vorteilhaft ist deshalb die Grenztemperatur auf eine Temperatur - abhängig von dem verwendeten Kraftstoff mit hohem Zündpunkt - in dem Bereich zwischen 25 und 50°C festgelegt.

Pflanzenöle, die sehr häufig die Basis für Kraftstoffe bilden, sind beispielsweise Rapsoder Sonnenblumenöl. Solche Kraftstoffe verhalten sich bereits bei einer Temperatur von 30°C hinsichtlich ihrer Viskosität ähnlich wie Dieselkraftstoff. Es ist deshalb besonders vorteilhaft die Grenztemperatur auf 30°C festgelegt.

Die Problematik bei Kraftstoffen mit höherem Zündpunkt wird zumindest zum Teil durch die höhere Viskosität bei tiefen Temperaturen hervorgerufen. Die Viskosität des verwendeten Kraftstoffes kann über seine Temperatur ermittelt werden. Andererseits wird bei Serien-Brennkraftmaschinen die Temperatur des Kraftstoffes üblicherweise an anderen, nicht relevanten Stellen gemessen. Es müsste folglich ein zusätzlicher Temperatursensor im Kraftstoffkreislauf vorgesehen werden. Um solche zusätzliche Hardware zu vermeiden, ist es sinnvoll eine andere Temperatur zu verwenden, die aber einen Rückschluss auf die Kraftstofftemperatur zulässt. Vorteilhaft wird die Grenztemperatur deshalb auf die Temperatur des Kühlmittels angewandt. Dabei kann der übliche Temperaturfühler im Kühlwasserkreislauf der Brennkraftmaschine verwendet werden und es wird nicht der Einbau zusätzlicher Hardware notwendig.

Um die Komponenten der Kraftstoffzuführung in Abhängigkeit des verwendeten Treibstoffs mit unterschiedlichen Parametern ansteuern zu können, muss bekannt sein welcher Treibstoff verwendet wird. Diese Festlegung kann beispielsweise durch den Nutzer vorgenommen werden. Hierzu muss nach einer Betankung eine Eingabe erfolgen, über die der Motorsteuerung die Art des Kraftstoffs mitgeteilt wird. Hierzu ist eine Schnittstelle notwendig, über die der Nutzer die Eingabe vornehmen kann. Besonders vorteilhaft ist aber ein Sensor vorgesehen, der die Art des verwendeten Kraftstoffs detektiert. Auf diese Weise ist keine Fehleingabe durch den Nutzer möglich und Wahrscheinlichkeit einer falschen Ansteuerung lässt sich stark herabsetzen.

Ein Sensor zum Detektieren des verwendeten Kraftstoffs sollte möglichst nahe an den Komponenten verbaut werden, die - in Abhängigkeit von dem verwendeten Kraftstoff - unterschiedlich angesteuert werden sollen. Allerdings sollte bei so einer Bestückung des Kraftstoffleitsystems der unter Hochdruck stehende Teil gemieden werden, da solche zusätzlich eingebauten Komponenten immer Ursache von Leckagen sein können. Der Sensor ist deshalb vorteilhaft im Kraftstoffleitsystem direkt vor der Hochdruckpumpe montiert. Auf diese Weise ist der Sensor direkt vor der ersten unterschiedlich anzusteuernden Komponente montiert und detektiert die Kraftstoffart, die vor dieser Komponente ansteht. Da in diesem Teil des Kraftstoffleitsystems keine hohen Drücke vorherrschen, ist der Einbau problemlos zu bewerkstelligen.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine schematische Ansicht der Druckentwicklung im Common-Rail einer erfindungsgemäßen Brennkraftmaschine bei verschiedenen Kraftstoffen,
- Fig. 2: die Stellung von Zumesseinheit und Druckregelventil in Abhängigkeit von der Temperatur bei einer erfindungsgemäßen Brennkraftmaschine mit Zweisteller-Regelung,
- Fig. 3: den schematischen Aufbau eines Kraftstoffkreislaufs einer erfindungsgemäßen Brennkraftmaschine und
- Fig. 4: den Schnitt durch eine Zumesseinheit.

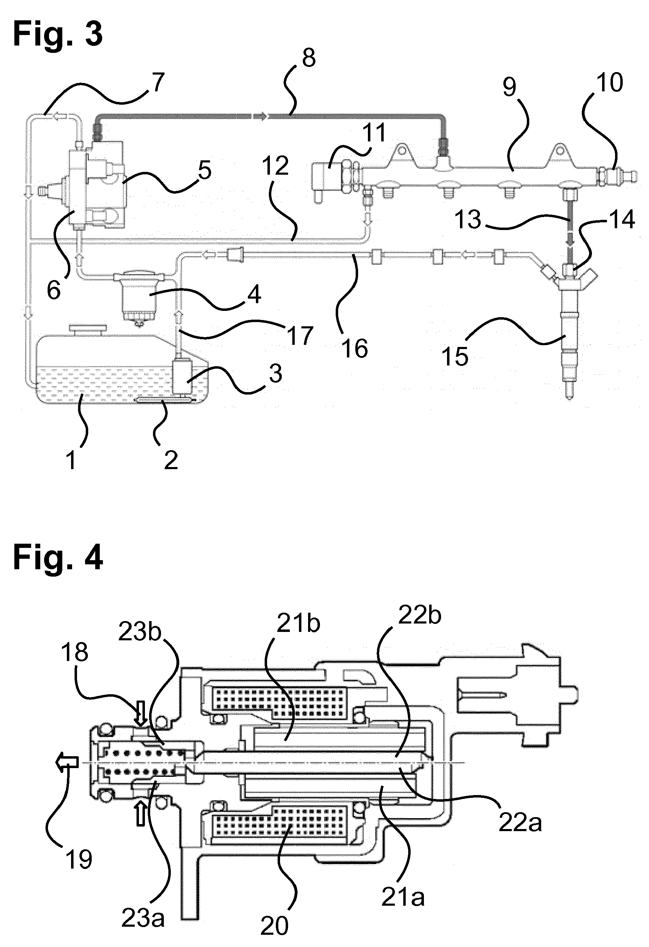

Der in Fig. 3 dargestellte Kraftstoffkreislauf weist ein Common-Rail-System auf. Dieses besteht hauptsächlich aus der Hochdruckpumpe 5, dem eigentlichen Common-Rail 9 (Druckspeicher) und dem Injektor 15. Die Injektoren können sowohl als elektro-magnetisch oder als piezo-elektrisch betätigte Injektoren ausgebildet sein.

Weiterhin gehören zu dem gezeigten Common-Rail-System die Zumesseinheit 6 die direkt an der Hochdruckpumpe 5 angebracht ist und das Druckregelventil 11. Durch das Vorhandensein von Zumesseinheit 6 und Druckregelventil 11 spricht man hier von einem so genannten Zweistellersystem. Zur Ansteuerung des Druckregelventils 11 wird noch der Raildrucksensor 10 benötigt, der genauso wie das Druckregelventil 11 mit der Motorsteuerung verbunden ist.

Zu dem Kraftstoffkreislauf gehört noch der Kraftstofftank 1, der den Kraftstoff bevorratet. Der Kraftstoff wird von der Kraftstoffpumpe 3 über den Vorfilter 2 entnommen und über die Kraftstoffzuführleitung 17 der Zumesseinheit 6 zugeführt. In die Kraftstoffzuführleitung 17 ist noch der Feinfilter 4 eingebaut, der den Kraftstoff auch von feinsten Partikeln befreit. Der Feinfilter 4 ist so aufgebaut, dass auch evtl. in dem Kraftstoff enthaltenes Wasser abgeschieden werden kann.

In der Hochdruckpumpe 5 wird der von der Zumesseinheit 6 erhaltene Kraftstoff unter Druck gesetzt und über die Hochdruckleitung 8 (alle unter Hochdruck stehenden Leitungen sind schwarz eingezeichnet) dem Comon-Rail 9 zugeführt. Der unter Hochdruck stehende Kraftstoff steht mit dem Raildruck über die Hochdruckleitung 13 auch im Injektor 15 an.

Zwischen der Hochdruckleitung 13 und dem Injektor 15 befindet sich bei dieser Ausführungsform der Druckrohrstutzen 14. Das Filter- und Dämpfelement in dem Druckrohrstutzen ist in dieser Darstellung nicht sichtbar.

Weiterhin weist der Kraftstoffkreislauf noch verschiedene Rückführleitungen auf, die Leckagekraftstoff an verschiedenen Stellen dem System wieder zuführen. So führt die Leckageleitung 7 zu viel zu der Hochdruckpumpe 5 geförderten Kraftstoff in den Kraftstofftank 1 zurück. In dieser Leckageleitung 7 befindet sich zum Teil Kraftstoff, der im Hochdruckteil der Hochdruckpumpe 5 durch tatsächliche Leckagen anfällt. Die leitung führt aber auch überflüssigen Kraftstoff, der von der Kraftstoffpumpe 5 zu viel gefördert wurde. Die Kraftstoffpumpe 5 ist so ausgelegt, dass immer zu viel Kraftstoff gefördert wird. Da in der Kraftstoffpumpe 5 sehr hohe Temperaturen entstehen, wird dieser zu viel geförderte Kraftstoff zur Kühlung der Hochdruckpumpe verwendet. Die Leckageleitung 7 mündet deshalb in den Kraftstofftank 1 der gleichzeitig als Kraftstoffkühler wirkt und dem sich der rückgeführte heiße Kraftstoff mit dem kühlen Kraftstoffvorrat vermischen kann.

Über die Leckageleitung 12 und das Druckregelventil 11 kann der Raildruck geregelt werden. Das bedeutet, dass auch hier sehr heißer, gerade eben durch die Hochdruckpumpe auf Hochdruck verdichteter Kraftstoff rückgeführt wird. Die Leckageleitung 12 mündet deshalb ebenso im Kraftstofftank 1. Die Leckageleitung 16 dagegen, die den Leckagekraftstoff aus den Injektoren 15 aufnimmt, mündet in die Kraftstoffzuführleitung 17, die zur Zumesseinheit 6 führt.

In Fig. 4 ist die in Fig. 3 mit dem Bezugszeichen 6 gekennzeichnete Zumesseinheit im Schnitt dargestellt. Es sollen hier nur die für das Verständnis der Funktion maßgeblichen Teile der Zumesseinheit beschrieben werden. In Fig. 4 sind Anker 21, Stößel 22 und Kolben 23 in ihrer geschlossenen Stellung jeweils mit a und in ihrer offenen Stellung jeweils mit b bezeichnet.

Der Kraftstoffzulauf 18 zu der Zumesseinheit erfolgt über die Kraftstoffzuführleitung 17 (Fig. 3), während der Kraftstoffablauf 19 zu der Hochdruckpumpe 5 (Fig. 3) über eine direkte Verbindung zwischen Zumesseinheit und Hochdruckpumpe erfolgt. Durch die Zumesseinheit wird der Volumenstrom an Kraftstoff geregelt, der der Hochdruckpumpe von der Kraftstoffpumpe zugeführt wird. Der Volumenstrom des Kraftstoffablauf 19 ist von der Stellung des Kolbens 23 abhängig.

Die Ansteuerung der Zumesseinheit erfolgt über die Motorsteuerung mit Hilfe eines pulsweitenmodulierten Signals. Bei der Ansteuerung der Magnetspule 20 wird der Stößel 22 mit dem durch die Magnetkraft betätigten Anker 21 bewegt. Über den Stößel 22 wird der Kolben 23 verschoben. Der Kolben 23 wird von einer Feder gegen den Stößel 22 gedrückt. Der Kolben 23 gibt, regelt entsprechend seiner Stellung, den Kraftstoffzulauf 18.

Bei älteren Common-Rail-Systemen war die Förderleistung der Hochdruckpumpe so ausgelegt, dass die Versorgung bei Volllast und hoher Drehzahl ausreicht und im Leerlauf bzw. Teillast ein Fördermengenüberschuss besteht. Dieser zu viel verdichtete Kraftstoff wurde über das Druckregelventil an dem Common-Rail zum Kraftstoffbehälter zurückgeführt. Hierdurch ergab sich jedoch ein sehr hoher Leistungsbedarf der Hochdruckpumpe.

Bei den folgenden Common-Rail-Systemen wurde der Raildruck niederdruckseitig über ein Mengenregelventil (Zumesseinheit) geregelt. Die Hochdruckpumpe fördert dadurch nur die Kraftstoffmenge, die der Motor tatsächlich benötigt. Durch diese Ausführung sinkt der Energiebedarf der Hochdruckpumpe, und damit der Kraftstoffverbrauch.

Bei den Hochdruckpumpen in diesen Common-Rail-Systemen ist eine Verbesserung des Wirkungsgrades durch eine kraftstoffzulaufseitige (saugseitige) Mengenregelung erreicht worden. Hierbei wird der in die Pumpenelemente strömende Kraftstoff durch die stufenlos regelbare Zumesseinheit dosiert. Dieses Mengenregelventil ist ist bei diesen Common-Rail-Systemen anstatt des Druckregelventils des Common-Rails an die Hochdruckpumpe angebaut worden und passte die ins Common-Rail geförderte Kraftstoffmenge dem Systembedarf an. Die Zumesseinheit fördert nur so viel Kraftstoff, dass der aus einem Kennfeld verlangte Raildruck erzeugt werden kann.

Es hat sich jedoch gezeigt, dass bei schnellen Lastwechseln der Druckaufbau bzw. der Druckabbau im Common-Rail zu lange dauert, wenn der Druck nur auf der Saugseite mit der Zumesseinheit eingestellt werden kann. Die Druckanpassung an die veränderten Lastbedingungen reagiert zu träge. Deshalb erhielten neueste Common-Rail-Systeme neben der Zumesseinheit 6 an der Hochdruckpumpe 5 zusätzlich wieder das Druckregelventil 11 am Common-Rail 9. Mit diesem Zweistellersystem werden die Vorteile der niederdruckseitigen Regelung mit der schnellen hochdruckseitigen Regelung kombiniert.

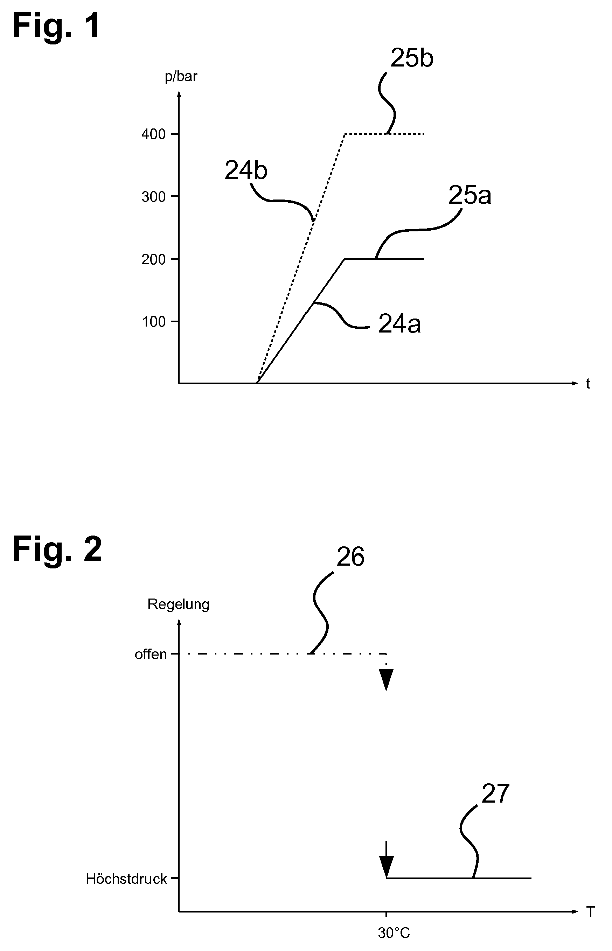

Um die Brennkraftmaschine beispielsweise mit Dieselkraftstoff und mit Pflanzenölkraftstoff betreiben zu können, muss das Common-Rail-System - insbesondere bei Kaltstart-Bedingungen - unterschiedlich angesteuert werden. Für ein besonders vorteilhaftes Zweistellersystem ist der Verlauf des Raildrucks vor dem Start in Fig. 1 skizziert.

Der Verlauf des Raildrucks mit Dieselkraftstoff ist durchgezogen dargestellt und jeweils mit dem Buchstaben a gekennzeichnet, während der Verlauf des Raildrucks mit Pflanzenöl gestrichelt dargestellt und jeweils mit dem Buchstaben b bezeichnet ist.

In Fig. 2 sind die Stellung des Zumesseinheit 6, strichpunktiert und mit dem Bezugszeichen 26, sowie die Stellung des Druckregelventils 11, durchgezogen und mit dem Bezugszeichen 27 versehen, für den Betrieb der Brennkraftmaschine mit Pflanzenöl aufgezeigt.

Bei einem Start mit Dieselkraftstoff wird die Zumesseinheit 6 entsprechend dem Kennfeld geöffnet. Gleiches gilt für das Druckregelventil 11.

Bei einem Start mit Pflanzenölkraftstoff wird die Zumesseinheit 6 dagegen vollständig geöffnet. Dieser Zustand der Zumesseinheit ist in Fig. 2 durch die strichpunktierte Linie 26 dargestellt. Das Druckregelventil 11 wird während dieser Zeitspanne über das Kennfeld geregelt. Durch die vollständige Öffnung der Zumesseinheit 6 kann durch die Hochdruckpumpe 5 mehr Kraftstoff verdichtet werden und der Startdruck im Common-Rail 9 wird schneller erreicht.

Dies ist gut aus Fig. 1 zu erkennen. Die gestrichelte Linie 24b, die den Druckanstieg im Common-Rail 9 bei der Verwendung von Pflanzenölkraftstoff darstellt, weist eine größere Steigung auf als die durchgezogene Linie 24a, die für den Druckanstieg im Common-Rail 9 bei der Verwendung von Dieselkraftstoff steht. Der Startdruck 25b für Pflanzenölkraftstoff liegt zwar höher als der Startdruck 25a für Dieselkraftstoff, wird aber in etwa zum gleichen Zeitpunkt erreicht. Auf diese Weise muss bei der Verwendung von Pflanzenölkraftstoff keine längere Vorlaufzeit in kauf genommen werden.

Bei dem Diagramm nach Fig. 2 wurde davon ausgegangen, dass die Kraftstoffzufuhr oberhalb einer Grenztemperatur von 30°C bei der Verwendung von Pflanzenölkraftstoff genauso geregelt wird, wie bei der Verwendung von Dieselkraftstoff. Das bedeutet, dass bei Erreichen dieser Grenztemperatur die Öffnung der Zumesseinheit wieder über das Kennfeld geregelt wird.

Das Druckregelventil 11 wird entsprechend der durchgezogenen Linie 27 ab dieser Grenztemperatur auf den maximal im Common-Rail 9 zulässigen Höchstdruck eingestellt. Im Normalfall findet die Regelung dann wie bei der Verwendung von Dieselkraftstoff in einem Common-Rail-System ohne Druckregelventil ausschließlich über die Zumesseinheit 6 statt. Nur bei schneller Lastzunahme wird die Zumesseinheit 6 wieder vollständig geöffnet und die Regelung wird ausschließlich über das Druckregelventil 11 vorgenommen.

### Bezugszeichenliste:

- 1: Kraftstofftank
- 2: Vorfilter
- 3: Kraftstoffpumpe
- 4: Feinfilter mit Wasserabscheider
- 5: Hochdruckpumpe
- 6: Zumesseinheit (Mengenregelventil)
- 7: Leckageleitung zum Kraftstofftank
- 8: Hochdruckleitung zum Common Rail
- 9: Common Rail (Druckspeicher)
- 10: Raildrucksensor
- 11: Druckregelventil
- 12: Leckageleitung vom Common Rail
- 13: Hochdruckleitung zum Injektor
- 14: Druckrohrstutzen
- 15: Injektor
- 16: Leckageleitung vom Injektor
- 17: Kraftstoffzuführleitung
- 18: Kraftstoffzulauf zur Zumesseinheit
- 19: Kraftstoffablauf zur Hochdruckpumpe
- 20: Magnetspule
- 21: Anker
- 22: Stößel
- 23: Kolben
- 24: Druckanstieg vor Startfreigabe
- 25: Startdruck
- 26: Stellung der Zumesseinheit
- 27: Stellung des Druckregelventils

## Patentansprüche

1. Direkteinspritzende selbstzündende Brennkraftmaschine, die mit einem Kraftstoff mit niedrigem Zündpunkt und mit einem Kraftstoff mit höherem Zündpunkt betreibbar ist, mit wenigstens einem Injektor (15) zum Einspritzen von Kraftstoff, einem Hochdruckspeicher (9) für den Kraftstoff, einer Hochdruckpumpe (5) und einer Zumesseinheit (6) und mit einer elektronischen Steuerung, in der unterschiedliche Steuerungsparameter für den Betrieb mit dem Kraftstoff mit niedrigem Zündpunkt und dem Betrieb mit dem Kraftstoff mit höherem Zündpunkt hinterlegt sind, **dadurch gekennzeichnet, dass** in der elektronischen Steuerung der Startdruck (25) hinterlegt ist, der in dem Hochdruckspeicher (9) erreicht werden muss, damit die Startfreigabe erfolgt, wobei der Startdruck (25) für den Kraftstoff mit dem höheren Zündpunkt gegenüber dem Kraftstoff mit dem niedrigen Zündpunkt mehr als 30 % erhöht ist.

2. Direkteinspritzende selbstzündende Brennkraftmaschine nach Anspruch 1, **dadurch gekennzeichnet, dass** in der elektronischen Steuerung Parameter zur Steuerung der Zumesseinheit (6) hinterlegt sind, wobei die Öffnung der Zumesseinheit (6) für den Kraftstoff mit dem höheren Zündpunkt für den Startvorgang gegenüber dem Kraftstoff mit dem niedrigen Zündpunkt mehr als 20 % vergrößert ist.

3. Direkteinspritzende selbstzündende Brennkraftmaschine nach einem der Ansprüche 1 bis 2, **dadurch gekennzeichnet, dass** die in der elektronischen Steuerung hinterlegten Parameter für den Betrieb der Brennkraftmaschine mit dem Kraftstoff mit dem höheren Zündpunkt beim Starten der Brennkraftmaschine eine vollständige Öffnung der Zumesseinheit (6) bewirken.

4. Direkteinspritzende selbstzündende Brennkraftmaschine nach Anspruch 3, **dadurch gekennzeichnet, dass** an dem Hochdruckspeicher (9) ein über die elektronische Steuerung ansteuerbares Druckregelventil (11) vorgesehen ist und dass die in der elektronischen Steuerung hinterlegten Parameter für den Betrieb der Brennkraftmaschine mit dem Kraftstoff mit dem höheren Zündpunkt während der Startphase der Brennkraftmaschine eine Regelung des Höchstdruckes in dem Druckspeicher (9) ausschließlich über das Druckregelventil (11) bewirken.

5. Direkteinspritzende selbstzündende Brennkraftmaschine nach einem der Ansprüche 1 bis 4, **dadurch gekennzeichnet, dass** eine Grenztemperatur festgelegt ist, oberhalb der die Steuerungsparameter für den Startdruck (25) und/oder die Regelung der Zumesseinheit (6) während der Startphase und/oder die Regelung des Druckregelventils (11) während der Startphase für beide Kraftstoffe identisch sind.

6. Direkteinspritzende selbstzündende Brennkraftmaschine nach Anspruch 5, **dadurch gekennzeichnet, dass** die Grenztemperatur auf eine Temperatur in dem Bereich zwischen 25 und 50°C festgelegt ist.

7. Direkteinspritzende selbstzündende Brennkraftmaschine nach Anspruch 6, **dadurch gekennzeichnet, dass** die Grenztemperatur auf 30°C festgelegt ist.

8. Direkteinspritzende selbstzündende Brennkraftmaschine nach einem der Ansprüche 5 bis 7, **dadurch gekennzeichnet, dass** die Grenztemperatur für die Temperatur des Kühlmittels gilt.

9. Direkteinspritzende selbstzündende Brennkraftmaschine nach einem der Ansprüche 1 bis 8, **dadurch gekennzeichnet, dass** eine Sensor vorgesehen ist, der die Art des verwendeten Kraftstoffs detektiert.

10. Direkteinspritzende selbstzündende Brennkraftmaschine nach Anspruch 9, **dadurch gekennzeichnet, dass** der Sensor im Kraftstoffleitsystem direkt vor der Hochdruckpumpe (5) montiert ist.
